# EUROPÄISCHE PATENTSCHRIFT

(11) **EP 2 468 445 B1**
(45) Veröffentlichungstag und Bekanntmachung des Hinweises auf die Patenterteilung: **24.08.2016**
(21) Anmeldenummer: 10196641.4
(22) Anmeldetag: 22.12.2010
(51) Int. Cl.: B23K 26/073, B23K 26/20, B23K 26/38, B23K 26/08

(54) **Laserbearbeitungsmaschine mit einem Diodenlaser, dessen Strahl um seine Strahlachse drehbar ist, und Verfahren zur Bearbeitung eines Werkstücks**
Laser processing machine with a diode laser, which laser beam can rotate around its axis, and method of machining a workpiece
Machine de traitement au laser avec un laser diode, dont son faisceau peut tourner autour de son axe, et procédé de traitement d'une pièce

(43) Veröffentlichungstag der Anmeldung: 27.06.2012
(73) Patentinhaber: Bystronic Laser AG, 3362 Niederönz (CH)
(72) Erfinder: Lüdi, Andreas, 3400 Burgdorf (CH); Wittwer, Stefan, 3360 Herzogenbuchsee (CH)
(74) Vertreter: Patentbüro Paul Rosenich AG

(56) Entgegenhaltungen:
- US-A- 5 120 926
- US-A- 6 044 096
- US-A1- 2006 113 289
- US-A1- 2010 122 972
- US-B1- 6 331 692

## Beschreibung

Die Erfindung betrifft eine Laserbearbeitungsmaschine umfassend einen Diodenlaser, dessen Strahl auf ein Werkstück ausrichtbar und zur Bearbeitung desselben vorgesehen ist. Weiterhin betrifft die Erfindung ein Verfahren zur Bearbeitung eines Werkstücks mit Hilfe eines Diodenlasers, dessen Strahl auf das Werkstück ausrichtbar und zur Bearbeitung desselben vorgesehen ist,

Siehe für beide Aspekte Ansprüche I und II (US 6 331 692 B1).

Die Materialbearbeitung mit Hilfe eines Lasers ist lange Zeit bekannt. Dabei wird ein hochenergetischer Lichtstrahl auf ein Material gerichtet, welcher dieses aufschmilzt, verdampft und/oder verbrennt. Auf diese Weise können Materialien einerseits getrennt (Laserschneiden) aber auch zusammengefügt (Laserschweissen) werden. Zu diesem Zweck werden z.B. CO2-Laser, Scheibenlaser, Nd:YAG-Laser, Faserlaser und in letzter Zeit auch Diodenlaser eingesetzt.

Die DE 198 39 482 A1 offenbart dazu ein Materialbearbeitungssystem mittels Hochleistungadiodenlaser, insbesondere zum Schweißen, Oberflächenreinigen, Auftragsschweißen, Schneiden, Bohren, Gravieren und dgl. Systemkomponenten sind im Wesentlichen ein einhandgeführter Bearbeitungskopf für einen Hochleistungsdiodenlaser, eine Laserquelle, die Stromversorgung mit Regelung und eine Sicherheitssensorik, weiterhin apparative Maßnahmen bzw. Anordnungen zum Strahlungsschutz, zur Abstandsregulierung und Leistungssteuerung über die Bearbeitungsgeschwindigkeit.

Die DE 198 59 243 A1 offenbart weiterhin eine Anordnung zum Schweißen, Schneiden, Bohren oder Beschichten mit einer Zweistrahlquelle und die Verwendung von Laserstrahlen zum Schweißen, Schneiden, Bohren oder Beschichten von metallischen oder nichtmetallischen Stoffen. Die Anordnung besteht aus einer Licht emittierenden Pumpquelle, vorzugsweise einem Diodenlaser oder einer Halogenlampe, und daran optisch angekoppelt einer Lichtleitfaser oder einem Laserstab.

Ausserdem offenbart die DE 10 2008 053 397 A1 ein Verfahren zum Schmelzschneiden von Werkstücken mit Laserstrahlung. Dabei wird bei vorgegebener Werkstückdicke eine maximale Absorption der Laserstrahlung erreicht, indem der Neigungswinkel der Schneidfront durch eine Anpassung der Geometrie eines Laserstrahls mittels Strahlformung und/oder einer der Vorschubbewegung überlagerten Bewegung des Brennpunktes des Laserstrahls verändert wird.

Zwar verfügen die bekannten Laserbearbeitungsmaschinen über eine ausreichende Leistung des Diodenlasers, aufgrund der beschränkten Strahlqualität jedoch nicht über eine ausreichende Leistungskonzentration. Zudem geht die im Stand der Technik offenbarte Lehre nicht auf die Asymmetrie des vom Diodenlaser emittierten Laserstrahls ein. Die natürliche asymmetrische Strahlung eines Diodenlasers weist ja in einer ersten transversalen Richtung eine vergleichsweise gute Strahlqualität (d.h. ein kleines Strahlparameterprodukt) auf, in die dazu orthogonale zweite transversale Richtung dagegen eine vergleichsweise schlechte Strahlqualität (d.h. ein grosses Strahlparameterprodukt).

Es sind auch Lösungen bekannt, um den asymmetrischen Laserstrahl eines Diodenlasers zu homogenisieren, sodass die Strahlqualität und die Ausbreitungscharakteristik in alle transversalen Richtungen mehr oder minder gleich sind. Beispielsweise kann eine solche Homogenisierung in einer kreisrunden Faser stattfinden, durch die der Laserstrahl geleitet wird. Leider geht damit eine Verschlechterung der an sich guten Strahlcharakteristik in der ersten transversalen Richtung einher, sodass nach dem Stand der Technik nur unbefriedigende Schnittergebnisse erzielt werden konnten, beziehungsweise die wegen des großen Brennflecks erforderliche Laserleistung vergleichsweise hoch und zum Teil nicht realisierbar ist. Beim Einkoppeln geht neben der Strahlqualität auch ein erheblicher Anteil des Lichts verloren, sodass der Wirkungsgrad der Laserbearbeitungsmaschine insgesamt deutlich verschlechtert wird. Zudem wird normalerweise die Polarisationscharakteristik des Diodenlasers in einer herkömmlichen Faser verändert. Im Endergebnis sind Diodenlaser nach dem Stand der Technik nur bedingt für die Materialbearbeitung geeignet.

Darüber hinaus offenbart die JP 6320296 A eine Laserbearbeitungsmaschine zum Bohren von Löchern, bei welcher ein Laserstrahl einerseits um seine Achse, gleichzeitig aber auch entlang einer kreisförmigen Bahn bewegt wird. Die beiden Bewegungen sind zueinander synchron, sodass die Hauptachse eines asymmetrischen Strahlprofils tangential zu der besagten Kreisbahn ausgerichtet ist. Die JP 6320296 A geht jedoch nicht auf die spezielle Problematik beim Laserschneiden mit Hilfe von Diodenlaser ein. Ausserdem ist die Maschine nicht universell einsetzbar, da bloss kreisrunde Ausschnitte hergestellt werden können. Zudem führt die lange Transmissionsstrecke im absorbierenden Prismenmaterial bei hohen Leistungen zu enormen Leistungsverlusten und im Umkehrschluss zu erheblichen thermisch verursachten Strahl- und Prozessschwankungen. Schließlich ist nach der JP 6320296 A eine Verschiebung der Strahlachse nötig, was die Laserbearbeitungsmaschine technisch aufwändig und damit fehleranfällig macht.

Schliesslich offenbart die US 2009/045176 A1 eine weitere Laserbearbeitungsmaschine zum Bohren von Löchern, bei welcher ein Laserstrahl einerseits um seine Achse, gleichzeitig aber auch entlang einer kreisförmigen Bahn bewegt wird. Auch die US 2009/045176 A1 geht nicht auf die spezielle Problematik beim Laserschneiden mit Hilfe von Diodenlaser ein, ist ebenfalls bloss zum Schneiden kreisrunder Ausschnitte geeignet und ähnlich aufwändig und fehleranfällig wie die JP 6320296 A.

In der US 2006/113289 A1 ist ein Laserbearbeitungsverfahren und System zur Materialbearbeitung offenbart, bei der ein Laserstrahl mittels eines optischen Systems gesteuert und auch zu einem elliptischen Strahlprofil modifiziert sowie dessen Orientierung in Bezug auf die Bewegungsrichtung des Lichtflecks auf dem Material gesteuert werden kann.

Die US 6 331 692 B1 wiederum hat eine Vorrichtung bzw. ein Verfahren zur Laserbearbeitung von Werkstücken mittels eines Diodenlasers zum Gegenstand, bei dem bewusst auf eine Umformung des elliptischen Laserstrahls des Diodenlasers in einen nahezu kreisförmig fokussierbaren Strahl verzichtet und stattdessen ein Linienfokus verwendet wird- Für gekrümmt Bearbeitungskonturen ist vorgesehen, dass diese Fokuslinie mit ihrer Längserstreckung an jedem Punkt der Kontur deren Tangente bildet.

Die der vorliegenden Erfindung zugrunde liegende Aufgabe besteht nun darin, eine verbesserte Laserbearbeitungsmaschine und ein verbessertes Verfahren zur Bearbeitung eines Werkstücks anzugeben. Insbesondere soll die Asymmetrie des von einem Diodenlaser emittierten Laserstrahls optimal ausgenützt werden, insbesondere zum Schneiden entlang einer beliebigen linienförmigen Bahn.

Erfindungsgemäss wird eine Laserbearbeitungsmaschine gemäß der Erfindung im Anspruch I definiert.

Weiterhin wird ein Verfahren gemäß der Erfindung im Anspruch II definirt.

Erfindungsgemäss wird damit erreicht, dass der asymmetrische Strahlquerschnitt eines von einem Diodenlaser erzeugten Laserstrahls optimal zur Bearbeitungsrichtung ausgerichtet werden kann. Beispielsweise kann der Laserstrahl so gedreht werden, dass beim Laserschneiden ein möglichst schmaler Schnittspalt entsteht und die eingesetzte Energie und das eingesetzte Material optimal genutzt werden. Besonders vorteilhaft wird durch die gleiche Ausrichtung der Hauptachse des asymmetrischen Strahlprofils und der Polarisationsrichtung eine maximale Schnittgeschwindigkeit realisiert, da einerseits der Schnittspalt nur schmal ist, andererseits aber auch die Absorption der Laserenergie durch das Werkstück maximal ist.

Der Laserstrahl kann aber auch so gedreht werden, dass beim Laserschweissen eine möglichst breite Schweissnaht entsteht. Ein weiterer positiver Effekt eines längs gezogenen Strahls beim Schneiden ist zudem, dass damit der Einfallswinkel des Laserstrahls auf der Schnittfront kleiner wird. Insbesondere bei dickeren Blechen (ab ca. 4 mm Blechdicke) führt dies zu erhöhter Absorption und erlaubt effizienteres Schneiden. Zudem ist eine Verschiebung der Strahlachse des Laserstrahls, so wie dies in der JP 6320296 A vorgesehen ist, nicht nötig. Schliesslich ist ein weiterer Vorteil der Erfindung auch darin zu sehen, dass die erfindungsgemässe Laserbearbeitungsmaschine Schnitte entlang beliebiger linienförmiger Bahnen anfertigen kann und nicht auf das Schneiden von kreisrunden Löchern limitiert ist. In diesem Zusammenhang kann die Erfindung auch darin gesehen werden, zu erkennen, dass durch die Aufhebung einer zu einer Rotation des Laserstrahls synchrone Kreisbewegung desselben eine universell einsetzbare Maschine erhalten wird. Darin ist auch die Möglichkeit enthalten, die Hauptachse des asymmetrischen Strahlprofils nach anderen Parametern wie z.B. dem Vorschub, dem bearbeiteten Material oder der angestrebten Schnittqualität auszurichten als nur nach der Bahnform oder der Schnittfuge.

An dieser Stelle wird der Vollständigkeit halber angemerkt, dass im Rahmen der Erfindung unter einem Diodenlaser selbstverständlich auch eine einzelne Laserdiode zu verstehen ist.

Vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn die Mittel zum Drehen des Laserstrahls durch einen Antrieb gebildet sind, welcher dazu vorbereitet ist, den Diodenlaser derart in Drehung zu versetzen, dass der emittierte Laserstrahl um seine Strahlachse gedreht wird. Bei dieser Variante der Erfindung wird der Diodenlaser selbst und in Folge natürlich auch der von diesem emittierte Laserstrahl gedreht. Vorteilhaft werden für die Drehung des Laserstrahls prinzipiell keine strahlformenden Elemente benötigt. Ein Einsatz derselben ist aber natürlich nicht ausgeschlossen.

Vorteilhaft ist es auch, wenn die Mittel zum Drehen des Laserstrahls durch ein drehbares, motorisch angetriebenes optisches Element gebildet sind, welches dazu vorbereitet ist, den im Strahlengang hinter dem optischen Element liegenden Teil des Laserstrahls derart in Drehung zu versetzen, dass der besagte Teilstrahl um seine Strahlachse gedreht wird. Bei dieser Variante der Erfindung kann der Diodenlaser stillstehen, die Drehung des Laserstrahls erfolgt durch ein optisches Element, welches nur den auf das Werkstück treffenden Teil des Laserstrahls beeinflusst. Eine Montage beziehungsweise Justage des Diodenlasers wird damit unter Umständen vereinfacht.

Besonders vorteilhaft ist es in diesem Zusammenhang, wenn das optische Element als Lichtleiter ausgeführt ist, wobei ein dem Diodenlaser benachbart angeordnetes Ende feststehend und das andere Ende motorisch angetrieben ist. Bei dieser Ausführungsform der Erfindung wird also ein Lichtleiter (z.B. eine Lichtleit-Faser), welche zwischen dem Dioden-laser und dem Werkstück angeordnet ist, verdrillt. Häufig ist eine solche Faser ohnehin vorhanden, beispielsweise wenn der Bearbeitungskopf der Laserbearbeitungsmaschine von einem abgesetzten Laser versorgt wird. Eine Realisierung der Erfindung kann in diesem Fall einfach dadurch erfolgen, dass ein Antrieb zum Verdrehen eines Endes der Faser vorgesehen wird. Bestehende Laserbearbeitungsmaschinen können somit relativ einfach nachgerüstet werden. An dieser Stelle wird angemerkt, dass eine Lichtleitfaser verwendet werden sollte, welche die asymmetrische Strahlung übertragen kann. Vorzugsweise wird dazu eine Lichtleitfaser mit querschnitts-asymmetrischen Lichtleiteigenschaften wie z.B. nicht-rundem Kern verwendet.

Vorteilhaft ist es zudem, wenn das optische Element als Dove-Prisma ausgeführt ist. Ein Dove-Prisma eignet sich in an sich bekannter Weise, einen Ausgangsstrahl gegenüber einem Eingangsstrahl um 180° zu drehen ohne dabei seine Achse zu verändern. Wird nun das Dove-Prisma selbst gedreht, so dreht sich der Ausgangstrahl mit der doppelten Geschwindigkeit des Dove-Prismas.

Vorteilhaft ist es darüber hinaus, wenn das optische Element nicht durch ein Dove-Prisma, sondern stattdessen aus einer Spiegeltreppe gebildet ist. Dies ist eine Kombination eines ersten Spiegels, eines zweiten Spiegels und eines dritten Spiegels gebildet ist, welche derart angeordnet sind, dass der Laserstrahl vom ersten Spiegel radial von der ursprünglichen Achse des Laserstahls weg gelenkt wird, von dem zweiten Spiegel radial zur genannten Achse gelenkt wird und vom dritten Spiegel in die ursprüngliche Achse des Laserstrahls gelenkt wird und wobei wenigstens einer der Spiegel motorisch angetrieben ist. Vorzugweise können auch alle Spiegel zusammen in einem Rohr montiert sein, das rotierbar gelagert ist. Auch durch diese Anordnung wird ein Ausgangsstrahl gegenüber einem Eingangsstrahl um 180° gedreht ohne dass die Strahlachse verändert wird. Wird die durch die Spiegel gebildete Anordnung nun um die Achse des Laserstrahls gedreht, so dreht sich der Ausgangstrahl synchron mit der Anordnung mit. Vorteilhaft absorbieren die Spiegel kaum Licht, weswegen diese Anordnung speziell für hohe Leistungen geeignet ist, ohne befürchten zu müssen, dass ungewollte thermische Effekte auftreten. Darüber hinaus können die Spiegel beliebig geformt sein (z.B. als Hohlspiegel), um den Laserstrahl nicht nur zu drehen, sondern auch zu formen.

Besonders vorteilhaft ist es aber auch, wenn der Diodenlaser in einem gegenüber dem Werkstück verfahrbaren Bearbeitungskopf angeordnet ist. Diodenlaser sind vergleichsweise klein und können somit auch in einem Bearbeitungskopf untergebracht werden. Eine Lichtleit-Faser wie zuvor erwähnt kann daher entfallen. Besonders vorteilhaft ist es, wenn ein im Bearbeitungskopf angeordneter Diodenlaser auch selbst gedreht werden kann.

Vorteilhaft ist es auch, wenn der Diodenlaser unmittelbar über einem gegenüber dem Werkstück verfahrbaren Bearbeitungskopf angeordnet ist. Für diese Ausführungsform der Erfindung gelten dieselben Vorteile wie für die zuvor erwähnte Variante. Zusätzlich ist der Diodenlaser durch die Auslagerung aus dem Bearbeitungskopf aber leichter zugänglich. Zudem kann ein Bearbeitungskopf auch leicht mit verschiedenen. Typen von Diodenlasern kombiniert werden. Das System wird also modularer.

Vorteilhaft ist es, wenn die Laserbearbeitungsmaschine eine Steuerung umfasst, welche dazu vorbereitet ist, die Hauptachse eines asymmetrischen Strahlprofils des Diodenlasers und dessen Polarisationsrichtung stets längs einer Bearbeitungsrichtung der Laserbearbeitungsmaschine auszurichten. Diese Vorgangsweise eignet sich besonders dann, wenn die Laserenergie auf einen in Bearbeitungsrichtung gesehen schmalen Bereich konzentriert werden soll. Entsprechend sind beim Laserschneiden schmale Schnittspalte und hohe Schnittgeschwindigkeiten realisierbar. Denkbar ist aber auch, den Laserstrahl quer zu drehen, um die Laserenergie auf einen breiteren Bereich zu richten, beispielsweise um eine breite Schweissnaht zu erzeugen. Unter Umständen ist dann aber die Vorschubgeschwindigkeit zu reduzieren. Das vom Diodenlaser emittierte Laserlicht ist ohne die Anwendung weiterer Massnahmen linear polarisiert. Die Absorption des Laserlichts durch das Werkstück ist dann am grössten, wenn die Polarisationsrichtung entlang der Bearbeitungsrichtung ausgerichtet ist. Wird die Polarisationsrichtung parallel zur Bearbeitungsrichtung ausgerichtet, sind hohe Schnittgeschwindigkeiten beim Laserschneiden erzielbar. Denkbar ist aber auch, die Polarisationsrichtung quer zur Bearbeitungsrichtung auszurichten, um die vom Werkstück absorbierte Leistung zu reduzieren, ohne dass dazu die Leistung des Diodenlasers reduziert werden müsste.

Vorteilhaft ist es, wenn die Laserbearbeitungsmaschine Mittel zum Verändern einer Polarisation des Diodenlasers umfasst. Beispielsweise kann eine lineare oder zirkulare Polarisation des Laserstrahls verändert werden, um diesen optimal für die Materialbearbeitung einzustellen.

Günstig ist es auch, wenn die linienförmige Bahn, welche mit Hilfe des Diodenlasers geschnitten wird, zumindest einen geraden Abschnitt umfasst. Auf diese Weise kann die erfindungsgemässe Laserbearbeitungsmaschine universell eingesetzt werden.

An dieser Stelle wird angemerkt, dass es trotz der erfindungsgemässen Massnahmen (insbesondere der Drehung des Laserstrahls) bei engen Kurvenradien beim Laserschneiden wegen der Asymmetrie/Elliptizität des Laserstrahls zu einer Verbreiterung der Schnittfuge kommen kann. Aus diesem Grund ist es vorteilhaft ist, die Asymmetrie/Elliptizität des Laserstrahls trotz der erfindungsgemässen Massnahmen klein zu halten. Vorteilhaft können für diesen Zweck asphärische Linsen, asphärische Hohl-Spiegel oder dergleichen vorgesehen sein.

Weiterhin wird angemerkt, dass die für die Laserbearbeitungsmaschine angeführten Varianten und daraus resultierenden Vorteile sinngemäss auch für das erfindungsgemässe verfahren gelten und umgekehrt.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine schematisch dargestellte erfindungsgemässe Laserbearbeitungsmaschine;
- Fig. 2a: eine Draufsicht auf eine Bearbeitungsstelle, wobei die Hauptachse eines asymmetrischen Laserstrahls sowie seine Polarisation längs einer Bearbeitungsrichtung der Laserbearbeitungsmaschine ausgerichtet ist;
- Fig. 2b: eine Draufsicht wie in Fig. 2a, nur mit schräg zur Bearbeitungsrichtung ausgerichteter Polarisationsrichtung (nicht Teil der Erfindung);
- Fig. 2c: eine Draufsicht wie in Fig. 2a, nur mit schräg zur Bearbeitungsrichtung ausgerichteter Hauptachse (nicht Teil der Erfindung);
- Fig. 3a: eine Schrägansicht zur Verdeutlichung der in Fig. 2a dargestellten Polarisationsrichtung;
- Fig. 3b: eine Schrägansicht wie Fig. 3a, nur mit quer zur Bearbeitungsrichtung ausgerichteter Polarisation;
- Fig. 3c: eine Schrägansicht wie Fig. 3a, nur mit zirkularer Polarisation des Laserstrahls;
- Fig. 4: die Nachführung des Laserstrahls bei einem bogenförmigen Schnittspalt;
- Fig. 5: die Abhängigkeit des Absorptionsgrades des Laserstrahls von dessen Einfallswinkel;
- Fig. 6: einen Bearbeitungskopf mit einem darin angeordneten Diodenlaser;
- Fig. 7: einen Bearbeitungskopf mit einem Antrieb zur Verdrehung eines Lichtleiters;
- Fig. 8: einen Laserstrahl, der mit Hilfe eines Dove-Prismas gedreht wird und
- Fig. 9: einen Laserstrahl, der mit Hilfe einer Anordnung von drei spiegeln gedreht wird.

In den Figuren der Zeichnung sind gleiche und ähnliche Teile mit gleichen Bezugszeichen und funktionsähnliche Elemente und Merkmale
- sofern nichts Anderes ausgeführt ist - mit gleichen Bezugszeichen, aber unterschiedlichen Indizes versehen.

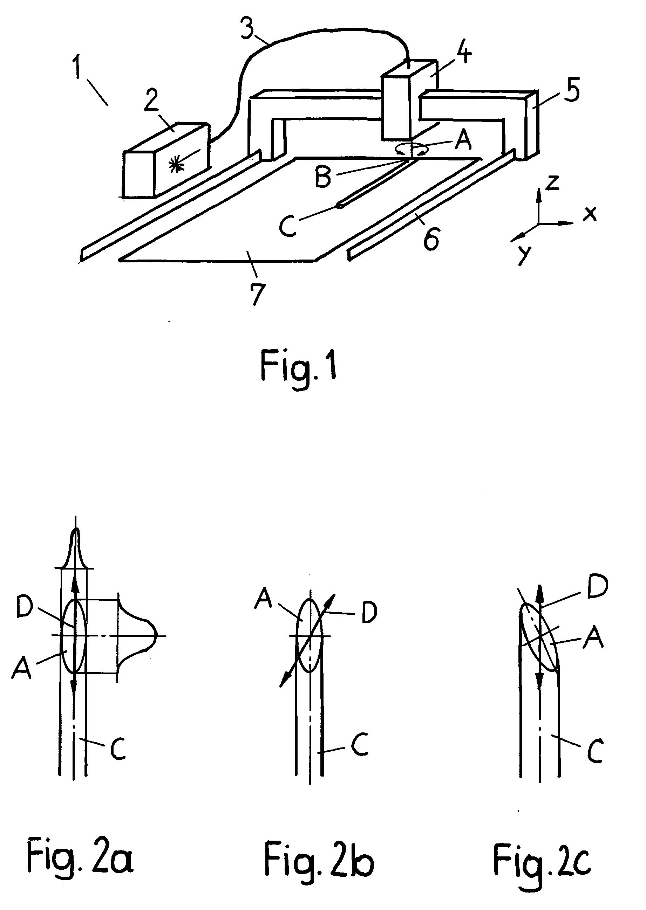

Fig. 1 zeigt eine beispielhafte Laserbearbeitungsmaschine 1, welche einen Diodenlaser 2, eine Lichtleitfaser 3, einen Bearbeitungskopf 4, einen Portalschlitten 5 und Schienen 6 umfasst und ein Werkstück 7 bearbeitet.

### Die Funktion der in der Fig. 1 dargestellten

Laserbearbeitungsmaschine 1 ist nun wie folgt:
Der Bearbeitungskopf 4 kann in an sich bekannter Weise entlang des Portalschlittens 5 in Richtung x, dieser wiederum entlang der Schienen 6 in Richtung y bewegt werden, sodass der Bearbeitungskopf 4 eine beliebige Bewegung in der x-y-Ebene ausführen kann. Mit Hilfe des Diodenlasers 2 wird Laserlicht erzeugt, das mittels des Lichtleiters 3 zum Bearbeitungskopf 4 geleitet und von dort auf das Werkstück 7 gerichtet wird. Der Laserstrahl A trifft in Folge an der Bearbeitungsstelle B auf das Werkstück 7. Während der Bewegung der Bearbeitungskopfes 4 wird daher das Werkstück 7 entlang der vom Bearbeitungskopf 4 vollführten Bahn geschnitten, wodurch der Schnittspalt C erzeugt wird. Erfindungsgemäß umfasst die Laserbearbeitungsmaschine 1 zusätzlich Mittel, um den Laserstrahl A um seine Achse zu drehen (in Fig. 1 durch einen Doppelpfeil angedeutet).

Fig. 2a zeigt die Bearbeitungsstelle B nun im Detail von oben, wobei der Laserstrahl A ein asymmetrisches Strahlprofil aufweist, dessen Hauptachse längs einer Bearbeitungsrichtung der Laserbearbeitungsmaschine 1 ausgerichtet ist. Konkret weist der Laserstrahl A im gezeigten Beispiel einen elliptischen Strahlquerschnitt auf, dessen Hauptachse entlang des Schnittspalts C ausgerichtet ist. In Fig. 2a sind zusätzlich auch die Intensitätsverteilungen des Laserlichts entlang der Hauptachse und entlang der Nebenachse der Ellipse dargestellt. Schliesslich ist auch eine Polarisationsrichtung D des vom Diodenlaser 2 emittierten und linear polarisierten Laserlichts dargestellt. Im gezeigten Beispiel sind die Hauptachse des elliptischen Strahlprofils und die Polarisationsrichtung das Laserstrahls A gleich ausgerichtet. Beides sorgt für einen guten Energieeintrag in die Bearbeitungsstelle B.

Fig. 2b zeigt ein nicht zur Erfindung gehörendes Beispiel, bei dem die letztgenannte Bedingung nicht mehr zutrifft. Zwar ist der elliptische Strahlquerschnitt des Laserstrahls A nach wie vor entlang des Schnittspalts C ausgerichtet, jedoch fällt die Polarisationsrichtung D nicht mit der Hauptachse zusammen sondern ist etwas nach rechts geneigt.

Fig. 2c zeigt ein weiteres nicht zur Erfindung gehörendes Beispiel, bei dem die Polarisationsrichtung D wie in Fig. 2b nicht mit der Hauptachse zusammenfällt, jedoch ist abweichend zu Fig. 2b der Laserstrahl A so ausgerichtet, dass Polarisationsrichtung D des Diodenlasers 2 längs einer Bearbeitungsrichtung der Laserbearbeitungsmaschine 1 auszurichtet bzw. die Hauptachse des elliptischen Strahlquerschnitts gegenüber dieser Bearbeitungsrichtung verdreht ist.

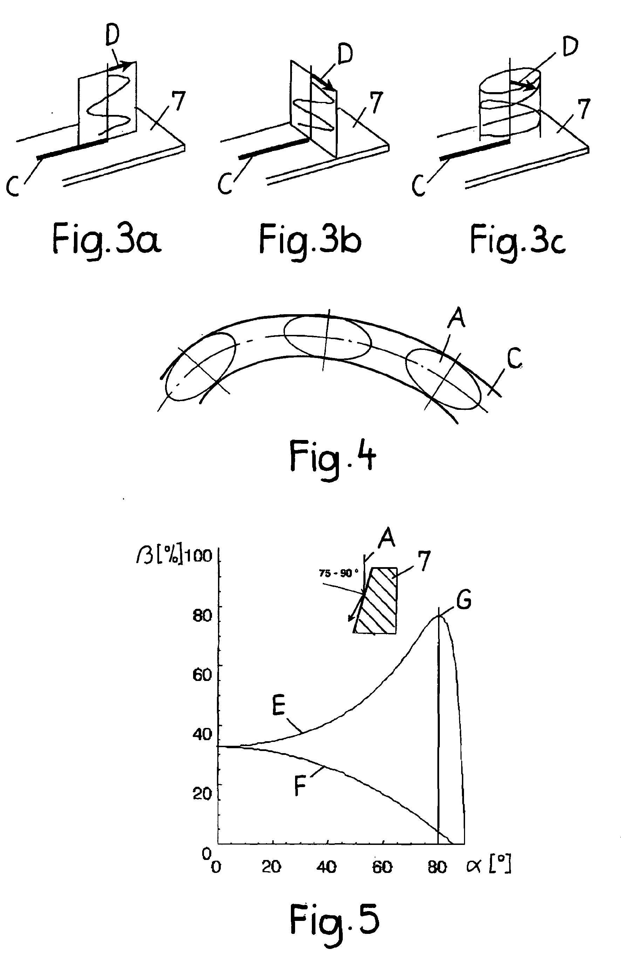

Die Figuren 3a bis 3c zeigen zur besseren Illustration der Erfindung verschiedene Möglichkeiten, wie der Laserstrahl A polarisiert sein kann. Fig. 3a zeigt eine lineare Polarisation des Laserstrahls A längs der Bearbeitungsrichtung, das heisst längs des Schnittspalts C, Fig. 3b eine lineare Polarisation des Laserstrahls A quer zur Bearbeitungsrichtung, und Fig. 3c zeigt schliesslich eine zirkulare Polarisation des Laserstrahls A.

In Fig. 4 ist anhand eines bogenförmigen Schnittspalts C dargestellt, dass die Hauptachse des Strahlquerschnitts stets entlang des Schnittspalts C ausgerichtet wird. Da das Werkstück 7 (in aller Regel) ruht, wird der Laserstrahl A entsprechend verdreht. Analog dazu kann natürlich auch das Werkstück 7 gedreht werden.

Fig. 5 zeigt den Einfluss des Einfallswinkels α (in Grad angegeben) und der Polarisationsrichtung auf den Absorptionsgrad β (in Prozent angegeben) des in das Werkstück 7 eindringenden bzw. es durchdringenden Laserstrahls A. Die obere Kurve E gilt dabei dann, wenn die Polarisationsrichtung D in Schnittrichtung ausgerichtet ist, die untere Kurve F für eine Polarisationsrichtung D quer zur Schnittrichtung. Dabei ist gut zu sehen, dass die untere Kurve kontinuierlich auf null abfällt, wohingegen die obere Kurve ein Maximum G bei zirka 75° bis 90° aufweist, das "Brewster-Maximum" genannt wird.

Eine besonders vorteilhafte Variante der Erfindung ist daher gegeben, wenn die Hauptachse des Strahlquerschnitts und die Polarisation längs des Schnittspalts ausgerichtet sind, und der Laserstrahl A unter einem Winkel von 75° bis 90° auf das Werkstück 7 trifft.

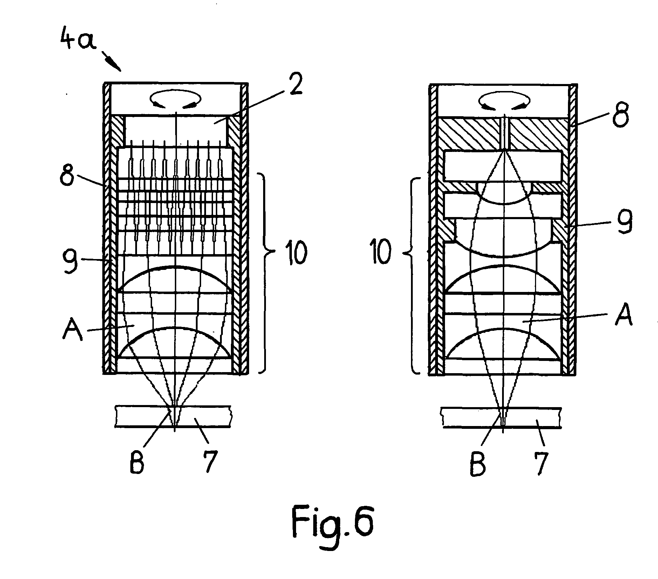

Fig. 6 zeigt nun ein erstes Beispiel dafür, wie der Laserstrahl A um seine Achse gedreht werden kann, nämlich vermittels eines Bearbeitungskopfes 4a, welcher ein äusseres Gehäuse 8 und ein darin drehbar angeordnetes inneres Gehäuse 9 umfasst. Dieses innere Gehäuse 9 beherbergt den Diodenlaser 2 und ein optisches System 10. Der Bearbeitungskopf 4a umfasst auch einen nicht dargestellten Antriebsmotor für das innere Gehäuse 9, welcher dazu vorbereitet ist, den Diodenlaser 2 derart in Drehung zu versetzen, dass der emittierte Laserstrahl A um seine Strahlachse gedreht wird. Prinzipiell sind hierfür alle Motoren, insbesondere Elektromotoren, mit und ohne Getriebe einsetzbar.

In diesem Beispiel ist gut zu erkennen, dass der Diodenlaser 2 in Form eines Barren-Lasers aufgebaut ist, d.h. es sind mehrere Laserdioden nebeneinander angeordnet, um eine geforderte Laserleistung zu realisieren. Aus Fig. 6 wird auch schnell klar, warum der Strahl A einen asymmetrischen Strahlquerschnitt hat (siehe dazu die Unterschiede des Strahls A in den beiden Seitenansichten). Ein Antriebsmotor für das innere Gehäuse 9 ist in der Fig. 6 nicht dargestellt, es sind aber prinzipiell alle Motoren, insbesondere Elektromotoren mit und ohne Getriebe einsetzbar.

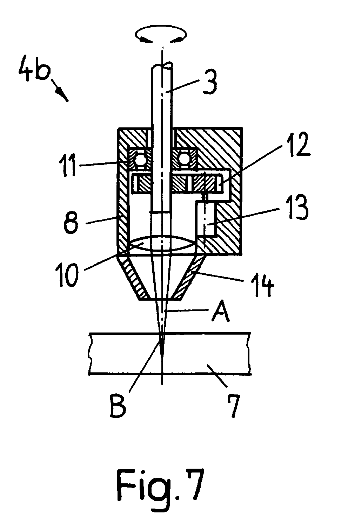

Fig. 7 zeigt nun eine weitere Variante der Erfindung in Form eines Bearbeitungskopfes 4b. Dieser umfasst ein Gehäuse 8, in dem ein optisches System 10 (hier der Einfachheit halber als simple Linse dargestellt), ein Lager 11, ein Getriebe 12 und ein Motor 13 angeordnet sind. Unterhalb des optischen Systems 10 ist darüber hinaus eine Schneiddüse 14 am Gehäuse 8 angebracht.

Durch den Innenring des Lagers 11 wird ein Lichtleiter 3 geführt und mit einem Getrieberad des Getriebes 12 verbunden. Ein weiteres Getrieberad des Getriebes 12 ist mit dem Motor 13 verbunden. Wird der Motor 13 nun in Drehung versetzt, so wird das Ende des Lichtleiters 3 und damit der Laserstrahl A gedreht.

Der Bearbeitungskopf 4 umfasst also ein drehbares, motorisch angetriebenes optisches Element 3, welches dazu vorbereitet ist, den im Strahlengang hinter dem optischen Element 3 liegenden Teil des Laserstrahls A in Drehung zu versetzen, derart dass der besagte Teilstrahl um seine Strahlachse gedreht wird. Konkret ist das optische Element als Lichtleiter ausgeführt, wobei ein dem Diodenlaser 2 benachbart angeordnetes Ende (siehe hierzu auch Fig. 1) feststehend und das andere Ende motorisch angetrieben ist.

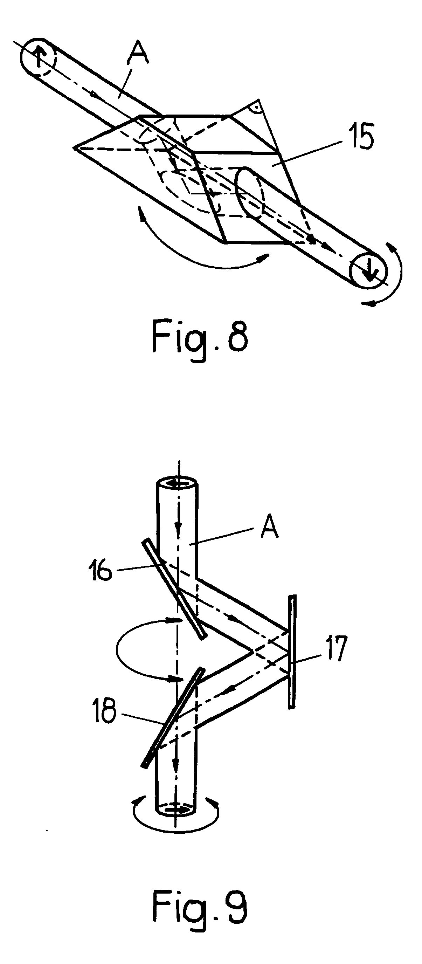

Fig. 8 zeigt nun eine weitere Möglichkeit, um einen Laserstrahl A um seine Achse zu drehen, in Form eines an sich bekannten Dove-Prismas 15. Beim Eintritt des Laserstrahls A wird dieser nach unten abgelenkt, an der Grundfläche des Dove-Prismas 15 nach oben reflektiert und beim Austritt wiederum nach unten abgelenkt, sodass die Achse des Laserstrahls A durch das Dove-Prisma 15 nicht geändert wird. Allerdings dreht das Dove-Prisma 15 den Laserstrahl A um 180° wie dies mit Pfeilen am Beginn und am Ende des Laserstrahls A angedeutet ist. Wird das Dove-Prisma 15 nun selbst um die Achse des Laserstrahls A gedreht, so dreht sich auch das Ende des Laserstrahls A. Fig. 8 zeigt nur eine schematische Darstellung des Prinzips. In einer realen Laserbearbeitungsmaschine 1 kann das Dove-Prisma 15 drehbar und motorisch angetrieben in einem Bearbeitungskopf 4 angeordnet sein.

Fig. 9 zeigt nun noch eine weitere Möglichkeit zur Drehung eines Laserstrahls A. Dieser wird von einem ersten Spiegel 16 radial nach aussen auf einen zweiten Spiegel 17 abgelenkt. Vom zweiten Spiegel 17 wird er radial nach innen auf einen dritten Spiegel 18 abgelenkt und von diesem schliesslich wieder in die Achse des Laserstrahls A gelenkt. Auch hier wird der Laserstrahl A um 180° gedreht (siehe wiederum die Pfeile am Beginn und am Ende des Laserstrahls A), ohne dass seine Achse verändert wird. Werden die Spiegel 16, 17 und 18 nun um die Achse des Laserstrahls A gedreht, so dreht sich auch das Ende desselben mit. Die Spiegeln 16, 17 und 18 können in einer realen Laserbearbeitungsmaschine 1 wiederum drehbar und motorisch angetrieben in einem Bearbeitungskopf 4 angeordnet sein. Vorteilhaft absorbieren die Spiegeln 16, 17 und 18 kaum Licht und können noch dazu beliebig geformt sein (z.B. als Hohlspiegel ausgebildet sein), um den Laserstrahl A nicht nur zu drehen, sondern auch zu formen. Insbesondere kann der Spiegel 17 wie ein Zylindermantel geformt um den Laserstrahl A angeordnet sein und braucht dann nicht bewegt werden.

In den Figuren 6 und 7 wurden Lösungen vorgestellt, bei denen der Strahlquerschnitt und die Polarisationsrichtung des Laserstrahls A gemeinsam gedreht werden. Möglich ist aber auch, eine Drehung der Polarisationsrichtung D unabhängig von einer Drehung der Intensitätsverteilung zu erwirken. Dies ist beispielsweise unter Zuhilfenahme einer λ/2-Platte oder aber auch mit einem Faraday-Rotator möglich. Durch Verdrehen der Polarisation ist es zum Beispiel möglich, den Wärmeeintrag in eine Bearbeitungsstelle B zu regulieren, ohne dass dazu die Leistung des Diodenlasers 2 verändert werden müsste. Darüber hinaus ist es möglich, die natürliche lineare Polarisation des Diodenlasers 2 mit Hilfe einer λ/4-Platte zirkular zu machen, ohne dabei die elliptische Intensitätsverteilung zu verändern.

Abschliessend wird angemerkt, dass die aufgezeigten Varianten nur einen Ausschnitt aus den vielen Möglichkeiten für das erfindungsgemässe Bearbeitungsverfahren und die erfindungsgemässe Laserbearbeitungsmaschine 1 darstellen, und nicht dazu herangezogen werden dürfen, den Anwendungsbereich der Erfindung zu limitieren. Für den Fachmann sollte es ein Leichtes sein, die Erfindung basierend auf den hier dargestellten Überlegungen auf seine Bedürfnisse anzupassen, ohne dabei den Schutzbereich der Erfindung zu verlassen.

Insbesondere ist die vorgestellte Laserbearbeitungsmaschine 1 nicht nur (wie in den Beispielen ausgeführt) zum Laserschneiden, sondern auch zum Laserschweissen geeignet. Während der Laserstrahl A beim Schneiden eher längs des Schnittspalts C ausgerichtet ist, um diesen möglichst schmal zu halten, kann beim Schweißen auch eine andere Ausrichtung des Laserstrahls A vorteilhaft sein. Insbesondere kann die Breite der Schweissnaht durch Verdrehung des asymmetrischen Strahlprofils relativ zur Schweissrichtung stufenlos verstellt werden. Der Brennfleck B kann mit Hilfe der Erfindung also optimal auf die momentan zu erledigende Aufgabe angepasst werden.

Selbstverständlich ist die Erfindung auch nicht auf Portalroboter gemäss Fig. 1 eingeschränkt, sondern kann auch auf Industrieroboter angewendet werden, welche in der Regel eine Bewegung in allen sechs Freiheitsgraden ermöglichen. Da ein auf dem Roboterarm montierter Bearbeitungskopf in diesem Fall "standardmässig" gedreht werden kann, kann auf eine gesonderte Dreheinrichtung im Bearbeitungskopf 4 verzichtet werden.

Darüber hinaus wird darauf hingewiesen, dass die Figuren teilweise unmasstäblich und auch stark vereinfacht gezeichnet sind. Eine real ausgeführte Laserbearbeitungsmaschine 1 kann daher mehr Bestandteile als dargestellt enthalten und somit deutlich komplexer aufgebaut sein, als dies in den Figuren dargestellt ist. Teile der in den Figuren dargestellten Anordnungen können darüber hinaus auch die Basis für unabhängige Erfindungen bilden. Insbesondere kann auch die blosse Anordnung eines Diodenlasers 2, dessen Strahl A auf ein Werkstück 7 ausrichtbar und zur Bearbeitung desselben vorgesehen ist, in einem Bearbeitungskopf 4 (also ohne dass eine Möglichkeit zur Drehung des Diodenlaser 2 oder seines Strahls A vorgesehen ist) eine unabhängige Erfindung bilden.

Die folgende Bezugszeichenliste und die technischen Lehren der Patentansprüche gelten als im Rahmen der Offenbarung liegend und offenbaren für den Fachmann alleine oder in der Zusammenschau mit den Figuren weitere Details der Erfindung und ihrer Ausführungsbeispiele.

### Bezugszeichenliste

- 1: Laserbearbeitungsmaschine
- 2: Diodenlaser
- 3: Lichtleiter
- 4, 4a, 4b: Bearbeitungskopf
- 5: Portalschlitten
- 6: Schiene
- 7: Werkstück
- 8: äußeres Gehäuse
- 9: inneres Gehäuse
- 10: optisches System
- 11: Lager
- 12: Getriebe
- 13: Motor
- 14: Schneiddüse
- 15: Wendeprisma oder Dove-Prisma
- 16: erster Spiegel
- 17: zweiter Spiegel
- 18: dritter Spiegel
- A: Laserstrahl
- B: Bearbeitungsstelle
- C: Schneidspalt
- D: Polarisationsrichtung
- E: Verlauf des Absorptionsgrads für Polarisation längs der Bearbeitungsrichtung
- F: Verlauf des Absorptionsgrads für Polarisation quer zur Bearbeitungsrichtung
- G: Brewster-Maximum
- α: Einfallswinkel
- β: Absorptionsgrad

## Patentansprüche

1. Laserbearbeitungsmaschine (1) umfassend einen Diodenlaser (2), dessen Strahl (A) auf ein Werkstück (7) ausrichtbar und zur Bearbeitung desselben vorgesehen ist, **gekennzeichnet durch** Mittel (9, 12, 13) zum Drehen des Laserstrahls (A) um seine Strahlachse,
so dass
die Hauptachse eines asymmetrischen Strahlprofils des Diodenlasers (2) und eine Polarisationsrichtung (D) des
Diodenlasers (2) gleich ausgerichtet sind.

2. Laserbearbeitungsmaschine (1) nach Anspruch 1, **dadurch gekennzeichnet, dass** die Mittel (9, 12, 13) zum Drehen des Laserstrahls (A) durch einen Antrieb gebildet sind, welcher dazu vorbereitet ist, den Diodenlaser (2) derart in Drehung zu versetzen, dass der emittierte Laserstrahl (A) um seine Strahlachse gedreht wird.

3. Laserbearbeitungsmaschine (1) nach Anspruch 1, **dadurch gekennzeichnet, dass** die Mittel zum Drehen des Laserstrahls (A) durch ein drehbares, motorisch angetriebenes optisches Element (3) gebildet sind, welches dazu vorbereitet ist, den im Strahlengang hinter dem optischen Element (3) liegenden Teil des Laserstrahls (A) derart in Drehung zu versetzen, dass der besagte Teilstrahl um seine Strahlachse gedreht wird.

4. Laserbearbeitungsmaschine (1) nach Anspruch 3, **dadurch gekennzeichnet, dass** das optische Element als Lichtleiter (3) ausgeführt ist, wobei ein dem Diodenlaser (2) benachbart angeordnetes Ende feststehend und das andere Ende motorisch angetrieben ist.

5. Laserbearbeitungsmaschine (1) nach Anspruch 3, **dadurch gekennzeichnet, dass** das optische Element als Dove-Prisma (15) ausgeführt ist.

6. Laserbearbeitungsmaschine (1) nach Anspruch 3, **dadurch gekennzeichnet, dass** das optische Element aus einer Kombination eines ersten Spiegels (16), eines zweiten Spiegels (17) und eines dritten Spiegels (18) gebildet ist, welche derart angeordnet sind, dass der Laserstrahl (A) vom ersten Spiegel (16) radial von der ursprünglichen Achse des Laserstahls (A) weg gelenkt wird, von dem zweiten Spiegel (17) radial zur genannten Achse gelenkt wird und vom dritten Spiegel (18) in die ursprüngliche Achse des Laserstrahls (A) gelenkt wird und wobei wenigstens einer der Spiegel (16, 17, 18) motorisch angetrieben ist.

7. Laserbearbeitungsmaschine (1) nach einem der Ansprüche 1 bis 6, **dadurch gekennzeichnet, dass** der Diodenlaser (2) in einem gegenüber dem Werkstücks (7) verfahrbaren
Bearbeitungskopf (4, 4a, 4b) angeordnet ist.

8. Laserbearbeitungsmaschine (1) nach einem der Ansprüche 1 bis 6, **dadurch gekennzeichnet, dass** der Diodenlaser (2) unmittelbar über einem gegenüber dem Werkstück (7) verfahrbaren
Bearbeitungskopf (4, 4b) angeordnet ist.

9. Laserbearbeitungsmaschine (1) nach einem der Ansprüche 1 bis 8, **gekennzeichnet durch** eine Steuerung, welche dazu vorbereitet ist, die Hauptachse des asymmetrischen Strahlprofils des Diodenlasers (2) und dessen Polarisationsrichtung (D) stets längs einer Bearbeitungsrichtung der Laserbearbeitungsmaschine (1) auszurichten.

10. Laserbearbeitungsmaschine (1) nach einem der Ansprüche 1 bis 9, **gekennzeichnet durch** Mittel zum Verändern einer Polarisation des Diodenlasers (2).

11. Verfahren zur Bearbeitung eines Werkstücks (7) mit Hilfe eines Diodenlasers (2), dessen Strahl (A) auf das Werkstück (7) ausrichtbar und zur Bearbeitung desselben vorgesehen ist, **dadurch gekennzeichnet, dass** der Laserstrahl (A) während der Bearbeitung um seine Strahlachse gedreht wird,
so dass
die Hauptachse eines asymmetrischen Strahlprofils des Laserstrahls (A) und eine Polarisationsrichtung (D) des Laserstrahls (A) gleich ausgerichtet werden.

12. Verfahren nach Anspruch 11, **dadurch gekennzeichnet, dass** die Hauptachse des asymmetrischen Strahlprofils des Laserstrahls (A) und die Polarisationsrichtung (D) des Laserstrahls (A) stets längs einer Bearbeitungsrichtung / eines Schnittspalts ausgerichtet werden.

13. Verfahren nach Anspruch 11 oder 12, **dadurch gekennzeichnet, dass** der Laserstrahl (A) unter einem Winkel von 75° bis 90° auf das Werkstück (7) trifft.

## Claims

1. Laser processing machine (1) comprising a diode laser (2), the beam (A) of which can be aligned onto a workpiece (7) and which is provided for machining the same, **characterized by** means (9, 12, 13) for rotating the laser beam (A) about its beam axis, so that the principal axis of an asymmetric beam profile of the diode laser (2) and a polarization direction (D) of the diode laser (2) are aligned in the same way.

2. Laser processing machine (1) according to Claim 1, **characterized in that** the means (9, 12, 13) for rotating the laser beam (A) are formed by a drive, which is prepared for setting the diode laser (2) into rotation in such a way that the emitted laser beam (A) is rotated about its beam axis.

3. Laser processing machine (1) according to Claim 1, **characterized in that** the means for rotating the laser beam (A) are formed by a rotatable, motor-driven optical element (3), which is prepared for setting the part of the laser beam (A) located in the beam path behind the optical element (3) into rotation in such a way that the said partial beam is rotated about its beam axis.

4. Laser processing machine (1) according to Claim 3, **characterized in that** the optical element is designed as light guide (3), wherein one end arranged adjacent to the diode laser (2) is stationary and the other end is driven by a motor.

5. Laser processing machine (1) according to Claim 3, **characterized in that** the optical element is designed as a Dove prism (15).

6. Laser processing machine (1) according to Claim 3, **characterized in that** the optical element is formed from a combination of a first mirror (16), a second mirror (17) and a third mirror (18), which are arranged in such a way that the laser beam (A) is deflected radially away from the original axis of the laser beam (A) by the first mirror (16), is deflected radially with respect to the said axis by the second mirror (17) and deflected into the original axis of the laser beam (A) by the third mirror (18), and wherein at least one of the mirrors (16, 17, 18) is driven by a motor.

7. Laser processing machine (1) according to any one of Claims 1 to 6, **characterized in that** the diode laser (2) is arranged in a machining head (4, 4a, 4b) which is movable relative to the workpiece (7).

8. Laser processing machine (1) according to any one of Claims 1 to 6, **characterized in that** the diode laser (2) is arranged directly above a machining head (4, 4b) which is movable relative to the workpiece (7).

9. Laser processing machine (1) according to any one of Claims 1 to 8, **characterized by** a control unit which is prepared such that it always aligns the principal axis of an asymmetric beam profile of the diode laser (2) and the polarization direction (D) thereof along a machining direction of the laser processing machine (1).

10. Laser processing machine (1) according to any one of Claims 1 to 9, **characterized by** means for modifying a polarization of the diode laser (2).

11. Method for machining a workpiece (7) by means of a diode laser (2), the beam (A) of which can be aligned to the workpiece (7) and which is provided for machining the same, **characterized in that** during the processing the laser beam (A) is rotated about its beam axis so that the principal axis of an asymmetric beam profile of the laser beam (A) and a polarization direction (D) of the laser beam (A) are aligned in the same way.

12. Method according to Claim 11, **characterized in that** the principal axis of the asymmetric beam profile of the laser beam (A) and the polarization direction (D) of the laser beam (A) are always aligned along a machining direction / a cutting gap.

13. Method according to Claim 11 or 12, **characterized in that** the laser beam (A) strikes the workpiece (7) at an angle of 75° to 90°.

## Revendications

1. Machine d'usinage laser (1) comprenant un laser à diodes (2) dont le faisceau (A) peut être aligné sur une pièce (7) et est prévu pour usiner celle-ci, **caractérisée par** des moyens (9, 12, 13) pour tourner le faisceau laser (A) sur son axe de faisceau, de sorte que l'axe principal d'un profilé de faisceau asymétrique du laser à diodes (2) et une direction de polarisation (D) du laser à diodes (2) soient alignés de façon égale.

2. Machine d'usinage laser (1) selon la revendication 1, **caractérisée en ce que** les moyens (9, 12, 13) pour tourner le faisceau laser (A) sont formés par un entraînement qui est préparé pour mettre en rotation le laser à diodes (2) de telle façon que le faisceau laser (A) émis soit tourné sur son axe de faisceau.

3. Machine d'usinage laser (1) selon la revendication 1, **caractérisée en ce que** les moyens pour mettre en rotation du faisceau laser (A) sont formés par un élément (3) optique rotatif, entraîné par moteur, lequel élément (3) est préparé pour mettre en rotation la partie du faisceau laser (A) derrière l'élément optique (3) dans le trajet du faisceau de telle façon que ledit faisceau partiel soit tourné sur son axe de faisceau.

4. Machine d'usinage laser (1) selon la revendication 3, **caractérisée en ce que** l'élément optique est conçu en tant que guide de lumière (3), dans lequel une extrémité disposée dans le voisinage du laser à diodes (2) est fixe et l'autre extrémité est entraînée de façon motorisée.

5. Machine d'usinage laser (1) selon la revendication 3, **caractérisée en ce que** l'élément optique est conçu en tant que prisme de Dove (15).

6. Machine d'usinage laser (1) selon la revendication 3, **caractérisée en ce que** l'élément optique est conçu à partir d'une combinaison d'un premier miroir (16), d'un deuxième miroir (17) et d'un troisième miroir (18) qui sont disposés de telle façon que le faisceau laser (A) est dévié par le premier miroir (16) en s'éloignant radialement de l'axe d'origine du faisceau laser (A), est dévié radialement en direction dudit axe par le deuxième miroir (17) et est dévié retour dans l'axe original du faisceau laser (A) par le troisième miroir (18), et dans lequel au moins un des miroirs (16, 17, 18) est entraîné par moteur.

7. Machine d'usinage laser (1) selon l'une des revendications 1 à 6, **caractérisée en ce que** le laser à diodes (2) est disposé dans une tête d'usinage (4, 4a, 4b) qui peut être déplacée par rapport à la pièce (7).

8. Machine d'usinage laser (1) selon l'une des revendications 1 à 6, **caractérisée en ce que** le laser à diodes (2) est disposé directement au-dessus d'une tête d'usinage (4, 4b) qui peut être déplacée par rapport à la pièce (7).

9. Machine d'usinage laser (1) selon l'une des revendications 1 à 8, **caractérisée par** une commande qui est préparée pour aligner l'axe principal du profilé de faisceau asymétrique du laser à diodes (2) et de sa direction de polarisation (D) en continu le long d'un sens d'usinage de la machine d'usinage laser (1).

10. Machine d'usinage laser (1) selon l'une des revendications 1 à 9, **caractérisée par** des moyens pour modifier une polarisation du laser à diodes (2).

11. Procédé d'usinage d'une pièce (7) à l'aide d'un laser à diodes (2) dont le faisceau (A) peut être aligné sur la pièce (7) et est prévu pour usiner celle-ci, **caractérisé en ce que** le faisceau laser (A) est tourné sur son axe de faisceau pendant l'usinage, de sorte que l'axe principal d'un profilé de faisceau asymétrique du faisceau laser (A) et une direction de polarisation (D) du faisceau laser (A) sont alignés de la même façon.

12. Procédé selon la revendication 11, **caractérisé en ce que** l'axe principal du profilé de faisceau asymétrique du faisceau laser (A) et la direction de polarisation (D) du faisceau laser (A) sont alignés en continu le long d'une direction d'usinage / d'une fente de coupe.

13. Procédé selon la revendication 11 ou 12, **caractérisé en ce que** le faisceau laser (A) arrive sur la pièce (7) dans un angle de 75° à 90°.
